# EUROPEAN PATENT APPLICATION

(11) **EP 0 990 551 A1**
(43) Date of publication of application: **05.04.2000**
(21) Application number: 99307747.8
(22) Date of filing: 30.09.1999
(51) Int. Cl.: B60N 2/30

(54) **Automotive seating assembly**

(30) Priority: 30.09.1998 GB 9821175
(71) Applicant: Magna Seating Systems GMBH, 97816 Lohr Am Main (DE)
(72) Inventor: Shephard, Phil Autoseat Technologies Limited, Northants NN12 7HS (GB)
(74) Representative: Raynor, Simon Mark

(57) **Abstract**

An automotive seating assembly, for example, a rear seat for a car, is disclosed. In an erected position, the seat is supported upon a leg assembly (20) and a link mechanism (22). The seat can be moved to a folded position, by first pivoting the leg assembly (20) to a position beneath a base (4) of the seat and then pivoting the seat about the link mechanism (22) to locate the seat within a recess (10) in the floor (8) of a vehicle. The link mechanism preferably causes the seat to move rearwards and inwards towards the centre line of the vehicle as it is folded.

## Description

The present invention relates to an automotive seating assembly. In particular, but not exclusively, the invention relates to a folding rear car seat that folds into the floor and at the same time moves inboard towards the centre line of the vehicle.

An aim of the present invention is to provide improvements generally to seating assemblies for vehicles. More specifically, it is an aim of the invention to provide a seat for a vehicle, such as a passenger-carrying motor land vehicle, which, when not in use, can be stored in order that the space occupied by it can be used for other purposes such as transportation of luggage or other items.

Accordingly, from a first aspect the present invention provides a folding seating assembly.

More specifically, and from a second aspect, the invention provides an automotive seating assembly comprising a seat having a base in which the seat can be moved between an erected position for use and a folded condition characterised in that, in the folded condition, the seat is located in a recess in the floor of a vehicle in which it is mounted. Thus, when the seat is in the folded position, it provides a minimum of obstruction within the internal space of the vehicle.

In preferred embodiments, the base is, in the erected position, supported on a link mechanism. Such a link mechanism may be disposed towards the rear of the seat. In a typical embodiment, the link assembly is pivotally connected to the base and to the floor.

Advantageously, the link assembly causes the seat to move towards the centre line of the vehicle as it is moved to the folded position. In preferred embodiments, the link assembly is connected to the floor via a pivot joint, the pivot axis of which is angled relative to a transverse axis of the vehicle.

In typical embodiments, in the erected position, the body is further supported on a leg assembly. For example, the leg assembly may include an element (or more than one element) that is supported within a recess in the floor of the vehicle when the seat is in the erected position. Such elements may, for example, be leg elements pivotally attached to the base of the seat. In a preferred embodiment, the leg assembly is pivotally connected to the base such that it may be folded towards the base when the seat is in the folded position.

From another aspect, the invention provides a seating assembly for a vehicle, the seating assembly including a link assembly on which a seat is supported, characterised in that the link assembly causes the seat to move towards the centre line of the vehicle as it is moved to a folded position.

An embodiment of the invention will now be described, by way of example, with reference to the accompanying drawing, in which:
Figure 1 is a side view of a rear car seat being a first embodiment of the invention, showing the seat in erected, semi-folded and folded positions, with supporting elements omitted;
Figure 2 is a side view of the seat of Figure 1 showing the seat occupied and in the erected and the folded position;
Figure 3 is a perspective view from one side and below of the seat of Figure 1 showing the seat occupied and in the erected and the folded position;

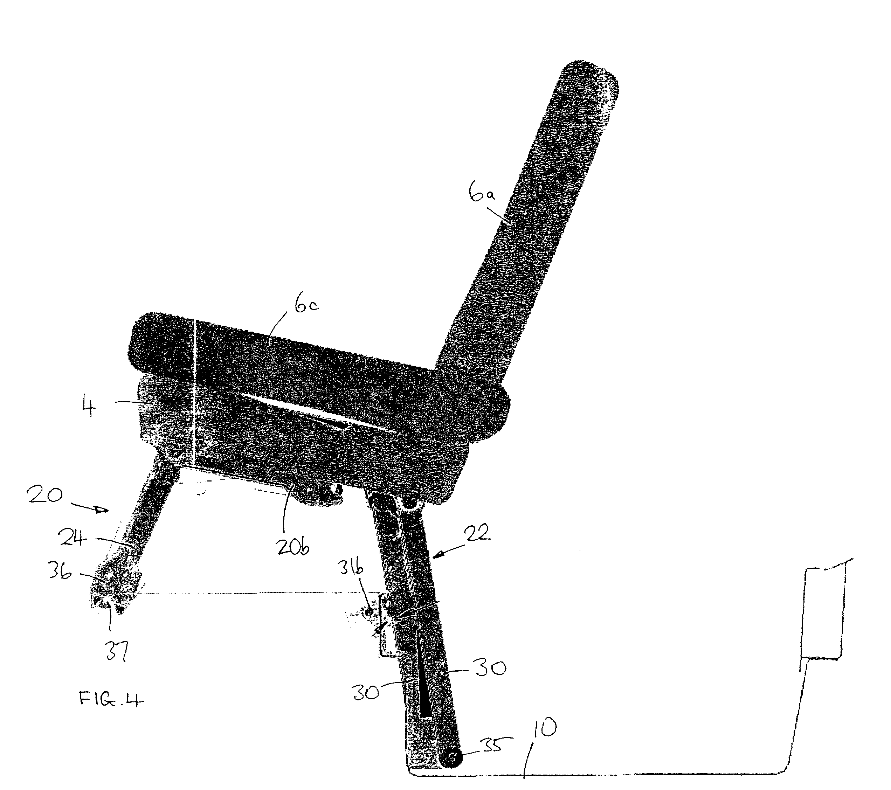

Figure 4 is a side view showing the seat in the erected position;

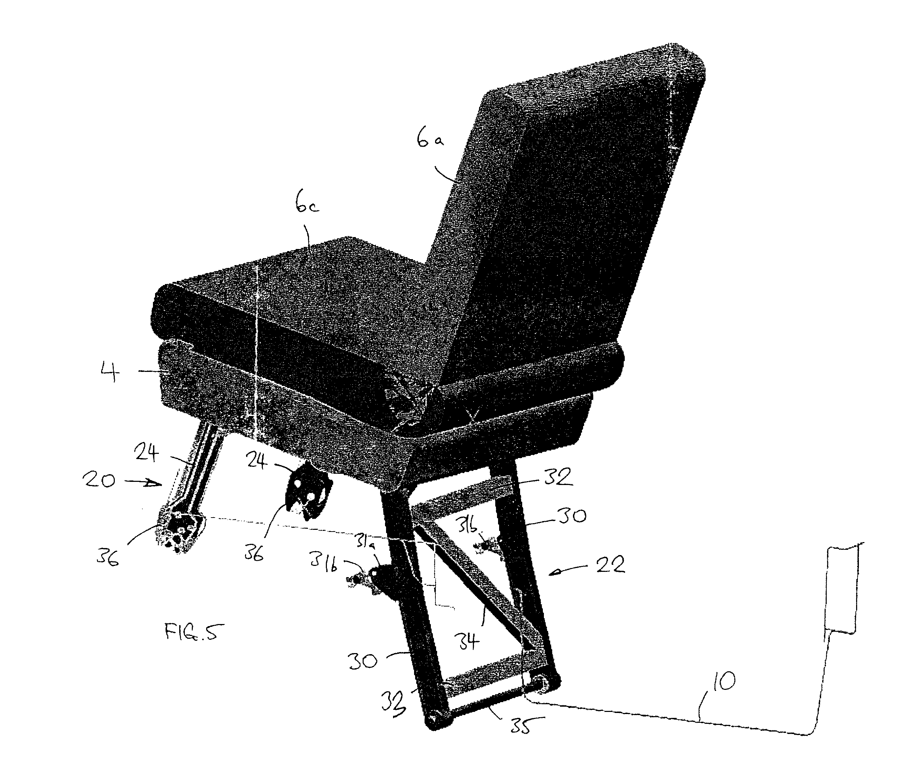

Figure 5 is a perspective view from one side and the rear of the seat, showing the seat in the erected position;

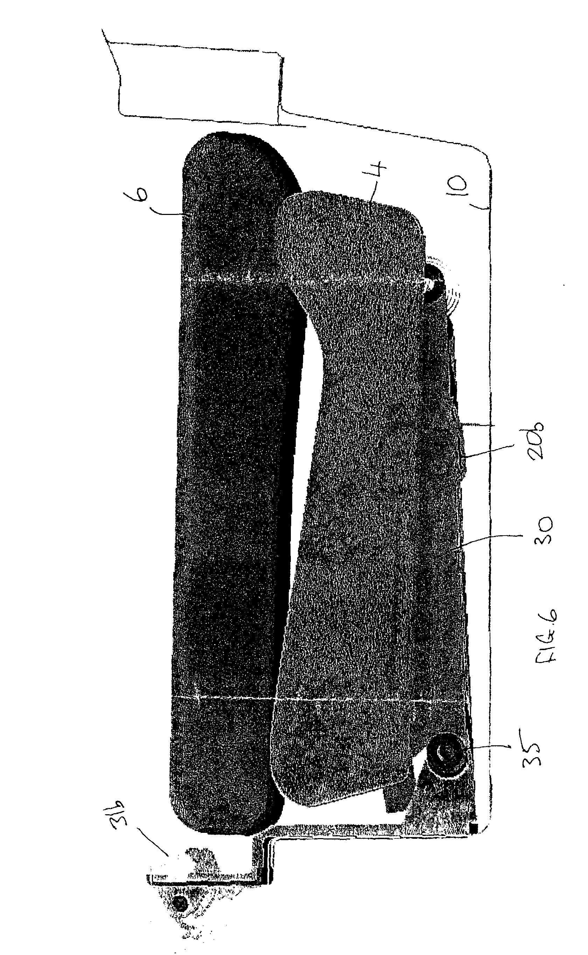

Figure 6 is a side view of the seat, showing the seat in the folded position;

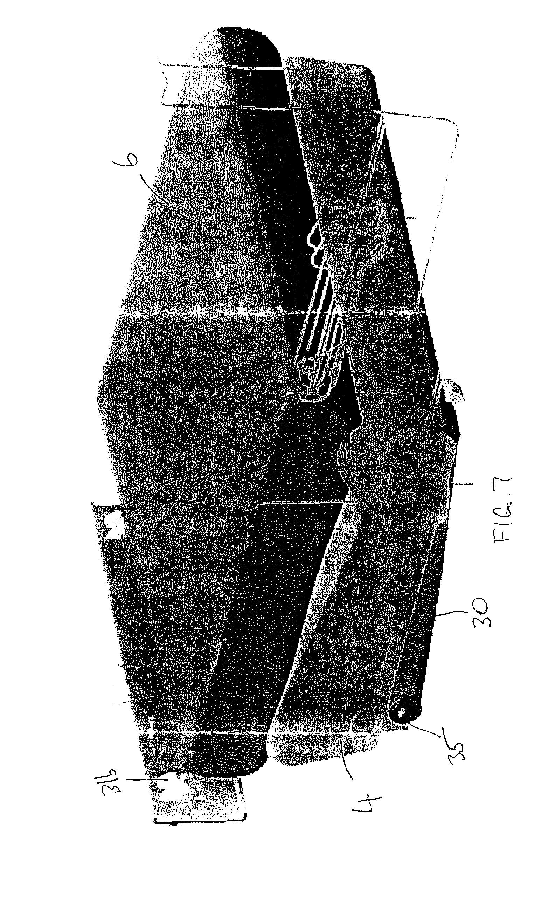

Figure 7 is a perspective view from one side and the rear of the seat, showing the seat in the folded position; and

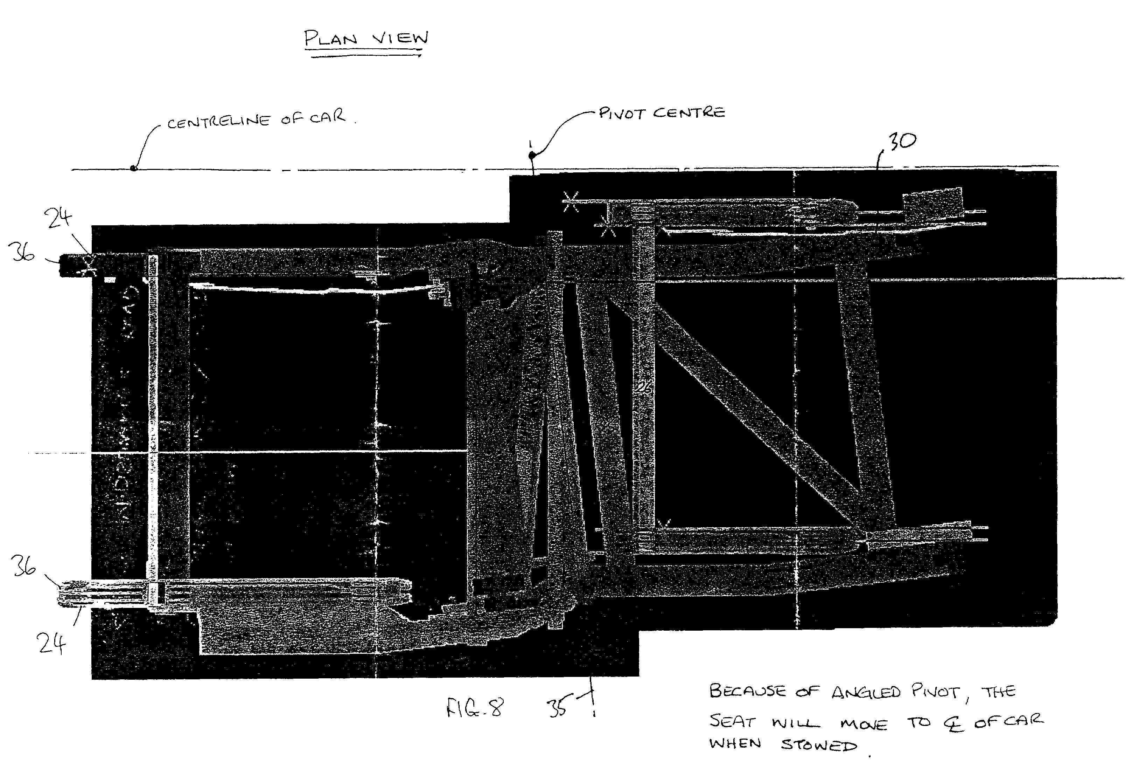

Figure 8 is a plan view showing the leg assembly and the link mechanism of the seat in the erected and the folded position.

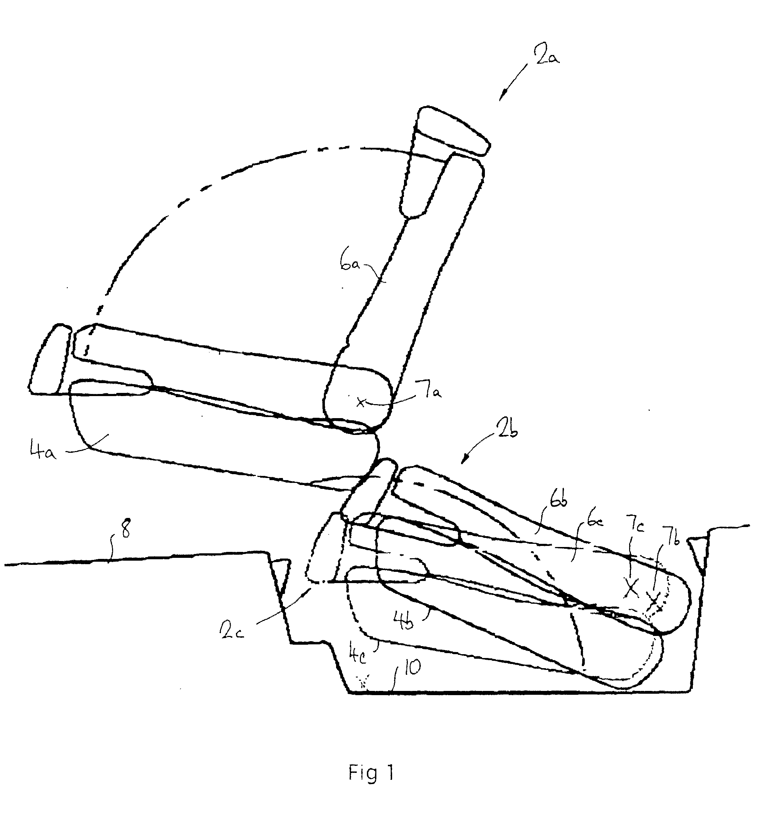

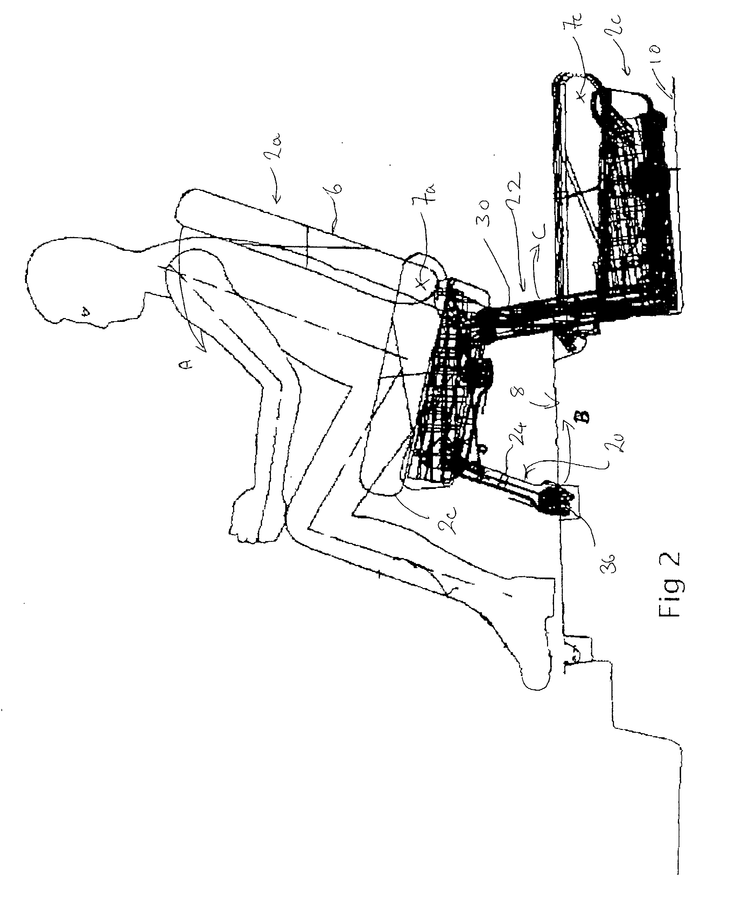

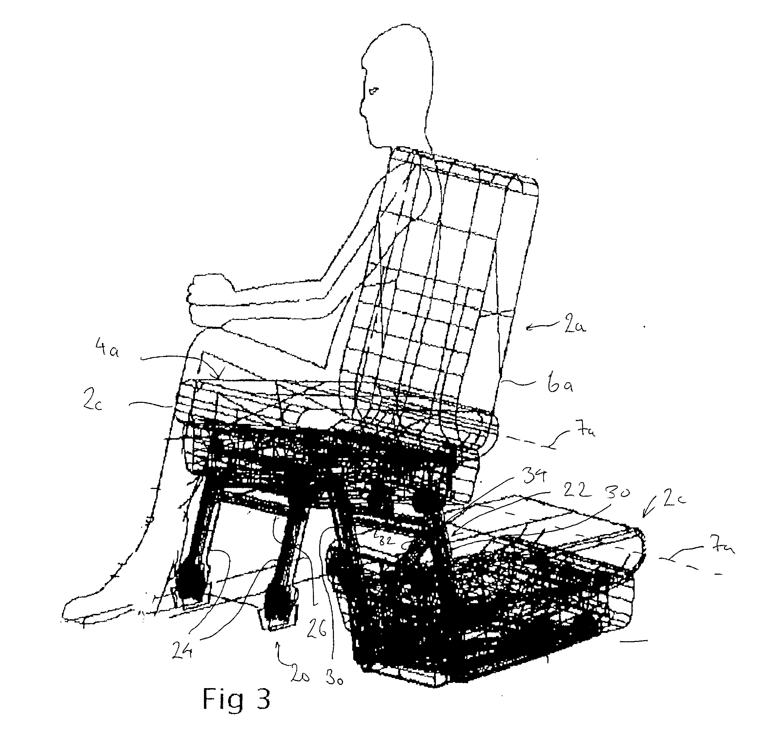

A seat 2 embodying the invention is shown in Figure 1 in an erected position at 2a, a semi-folded position at 2b and a folded position at 2c. Likewise, in Figures 2 and 3, the seat 2 is shown in the erected position at 2a and the folded position at 2c.

The seat 2 includes a base 4 and a back (or squab) 6. The back 6 is connected to the base 4 by a hinge mechanism that allows it to tilt forwards towards the base 4 about a substantially horizontal axis 7, as shown by the broken line in Figure 3.

The seat 2 further comprises a supporting leg assembly 20 disposed towards the front of the seat and a link mechanism 22 towards its rear. The leg assembly 20 and the link mechanism both serve as supports for the seat, as will now be described.

The leg assembly 20 comprises two elongate leg elements 24, each of which is connected at an upper end region to the underside of the seat base 4, spaced apart towards opposite sides of the seat 2. Each leg element 24 is connected to the seat so as to be pivotable, with respect to the base 4, about a generally horizontal axis. A tie component 26 interconnects the leg elements 24 to constrain them to pivot together, such that they remain substantially parallel to one another.

The link mechanism 22 comprises two elongate leg elements 30 each of which is connected at an upper end region to the underside of the seat base 4, spaced apart towards opposite sides of the seat 2. Each leg element 30 is connected to the seat so as to be pivotable, with respect to the base 4, about a generally horizontal axis and is provided with a bracket 31a on its forward surface that engages a latch 31b mounted on the floor of the vehicle to latch the leg element 30 in an upright position. Two tie components 32,33 interconnect the leg elements 30 to constrain them to pivot together, such that they remain substantially parallel to one another. Additionally, a diagonal bracing strut 34 interconnects an upper part of one leg element 30 with a lower part of the other. Close to their lower ends, each of the leg elements 30 is pivotally connected to the floor of the vehicle so as to be pivotable about a substantially horizontal axis 35 that is angled relative to a transverse axis of the vehicle, the end of the pivot axis that is disposed closer to the centre line of the vehicle being slightly further forward than the other end of the pivot axis.

In the erected position, the leg assembly 20 is pivoted into a position in which it extends in a downward and forward direction from the base 4 of the seat. A lower end of each of its leg elements 24 is provided with a latch 36 that engages a bracket 37 secured to the floor of the vehicle to latch the leg element 24 to the floor. Moreover, the link mechanism 22 is disposed with its leg elements 30 extending downwardly and rearwardly from the base 4. In this position, the leg assembly 20 and the link mechanism 22 support the seat above the vehicle floor 8.

To move the seat to the folded position, the back 6 is first pivoted, as indicated by arrow A on Figure 2, about its axis 7 to overlie the base 4 as shown at 6b. The latches 36 are then released and the front of the base 4 is lifted upwards, and the leg assembly 20 is pivoted as indicated by arrow B upward and rearwardly, as shown at 20b, such that it is positioned under the base 4, where it is secured by a catch (not shown). The rear latches 31b are then released and the seat is moved rearwards, supported on the link mechanism 22. As the seat is moved, the link mechanism 22 pivots as shown by arrow C with respect to both the seat and the floor 8 of the vehicle to guide the seat into the recess 10. In the final folded position, the seat lies on top of the link mechanism 22 within the recess such that a rear surface of the seat back 4 is flush with the floor 8 of the vehicle surrounding the recess.

The movement of the seat into the recess is illustrated by views of the semi-folded 2b and folded 2c positions of the seat. The effect of the angled pivot axis 35 of the link mechanism is to move the seat inboard, towards the centre line and away from the sides of the vehicle, as it folds into the recess 10.

It will be understood that the embodiment described could be mounted in a vehicle in alternative configurations. For example, the seat may be mounted in a reversed configuration in which the seat back is mounted towards the front of the vehicle.

## Claims

1. An automotive seating assembly comprising a seat having a base (4) in which the seat can be moved between an erected position for use and a folded condition characterised in that, in the folded condition, the seat is located in a recess (10) in the floor (8) of a vehicle in which it is mounted.

2. An automotive seating assembly according to claim 1 in which the base (4) is, in the erected position, supported on a link mechanism (22).

3. An automotive seating assembly according to claim 2 in which the link assembly (22) is pivotally connected to the base (4) and to the floor (8).

4. An automotive seating assembly according to claim 2 or claim 3 in which the link assembly causes the seat to move towards the centre line of the vehicle as it is moved to the folded position.

5. An automotive seating assembly according to any one of claims 2 to 4 in which the link assembly (22) comprises a pivot axis that is angled relative to a transverse axis of the vehicle.

6. An automotive seating assembly according to any preceding claim in which the base (4), in the erected position, is further supported on a leg assembly (20).

7. An automotive seating assembly according to claim 6 in which the leg assembly includes an element which is supported within a recess (36) in the floor (8) of the vehicle when the seat is in the erected position.

8. An automotive seating assembly according to claim 6 or claim 7 in which the leg assembly is pivotally connected to the base (4) such that it may be folded towards the base when the seat is in the folded position.

9. An automotive seating assembly according to any one of claims 6 to 8 in which the leg assembly (20) includes two leg elements pivotally attached to the base (4).
